# EUROPEAN PATENT APPLICATION

(11) **EP 3 513 915 A1**
(43) Date of publication of application: **24.07.2019**
(21) Application number: 18183028.2
(22) Date of filing: 11.07.2018
(51) Int. Cl.: B25J 9/00, B25J 9/16, G05B 19/423

(54) **AUTOMATIC CONTROL APPARATUS AND AUTOMATIC CONTROL METHOD**

(30) Priority: 22.01.2018 CN 201810058441
(71) Applicant: Kinpo Electronics, Inc., New Taipei City 22201 (TW)
(72) Inventor: TUNG, Chi-Chang, 22201 New Taipei City (TW)
(74) Representative: Emde, Eric

(57) **Abstract**

An automatic control apparatus including a controller and a motor device is provided. The motor device includes an output shaft. The controller drives the motor device so that the motor device is operated in a non-fixed mode or a fixed mode. If the motor device is operated in the fixed mode, a rotation angle of the output shaft of the motor device is maintained at a target angle. When the controller determines that the rotation angle of the output shaft is changed, if the controller determines that a difference between a current angle and the target angle exceeds a threshold angle, the controller resets the target angle by the current angle, so that the output shaft is maintained at a reset target angle. In addition, an automatic control method is also provided.

## Description

### BACKGROUND

### [Technical Field]

The disclosure relates to a control technique and particularly relates to an automatic control apparatus and an automatic control method.

### [Description of Related Art]

As technology advances, applications of automatic control techniques in daily life are gaining popularity, especially robots or robotic arms composed of multi-axis controllers. This kind of multi-axis control system includes multiple articulated joints and allows for movement in a flat or three-dimensional space or movement using linear displacement. Structurally such control system is composed of a mechanical main body, a control device, a servo mechanism and a sensor, and certain specified actions thereof are set by programs according to operational requirements.

For example, for a typical robot or robotic arm, if a certain posture thereof is to be set, the controller of the robot or the robotic arm must first perform a relax operation on the motor device at the joint. Then, after the user pulls the robot or the robot arm to a specific position, the controller of the robot or the robot arm reads and records the rotation angle of the motor device. However, if the robot or the robot arm has multiple joints, it is not easy to perform the above-mentioned operation. In other words, since the robot or the robotic arm droops under the influence of gravity, it is not easy for the user to maintain the posture of the robot or the robotic arm as it is. Consequently, how to design an automatic control apparatus having a convenient posture adjustment function is currently an important issue in this field.

### SUMMARY

The disclosure provides an automatic control apparatus and an automatic control method that may effectively adjust the rotation angle of the output shaft in correspondence with the magnitude of a torque applied to the output shaft of the motor device. Consequently, the automatic control apparatus of the disclosure may have a convenient posture adjustment function.

The automatic control apparatus of the disclosure includes a motor device and a controller. The motor device includes an output shaft. The controller is coupled to the motor device. The controller drives the motor device so that the motor device is operated in a non-fixed mode or a fixed mode. When the motor device is operated in the non-fixed mode, the output shaft is in a freely rotatable state. When the motor device is operated in the fixed mode, the output shaft is in a non-freely rotatable state. When the motor device is operated in the fixed mode, a rotation angle of the output shaft is maintained at a target angle. When the controller determines that the rotation angle of the output shaft is changed, if the controller determines that a difference between a current angle and the target angle exceeds a threshold angle, the controller resets the target angle by the current angle, so that the output shaft is maintained at a reset target angle.

The automatic control method of the disclosure is adapted for an automatic control apparatus. The automatic control apparatus includes a controller and a motor device, and the motor device includes an output shaft. The automatic control method in one of the exemplary embodiments is provided as follows. The motor device is driven by the controller so that the motor device is operated in a non-fixed mode or a fixed mode. Herein, when the motor device is operated in the non-fixed mode, the output shaft of the motor device is in a freely rotatable state, and when the motor device is operated in the fixed mode, the output shaft is in a non-freely rotatable state. When the motor device is operated in the fixed mode, a rotation angle of the output shaft is maintained at a target angle. When the controller determines that the rotation angle of the output shaft is changed, if the controller determines that a difference between a current angle and the target angle exceeds a threshold angle, the target angle is reset by the controller using the current angle, so that the output shaft is maintained at a reset target angle.

Based on the foregoing, the automatic control apparatus and the automatic control method of the disclosure provide an operation method in which whether to fine-tune the rotation angle of the output shaft of the motor device may be determined by the change in the rotation angle caused by the force applied by the user. Accordingly, the automatic control apparatus of the disclosure may provide a convenient posture adjustment function.

To make the aforementioned and other features and advantages of the disclosure more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a block diagram showing an automatic control apparatus according to an embodiment of the disclosure.
FIG. 2A is a schematic front view of a motor device according to an embodiment of the disclosure.
FIG. 2B is a schematic side view of a motor device according to an embodiment of the disclosure.
FIG. 3A and FIG. 3B are schematic views showing an automatic control apparatus according to an embodiment of the disclosure.
FIG. 4 is a flowchart showing an automatic control method according to an embodiment of the disclosure.
FIG. 5 is a flowchart showing an automatic control method according to another embodiment of the disclosure.

### DESCRIPTION OF THE EMBODIMENTS

In order to make the disclosure more comprehensible, several embodiments are described below as examples of the disclosure. However, it should be noted that the disclosure is not limited to the exemplified embodiments. Moreover, some embodiments may be combined where appropriate. Besides, elements/components/steps with the same reference numerals are used to represent identical or similar parts in the figures and embodiments where appropriate.

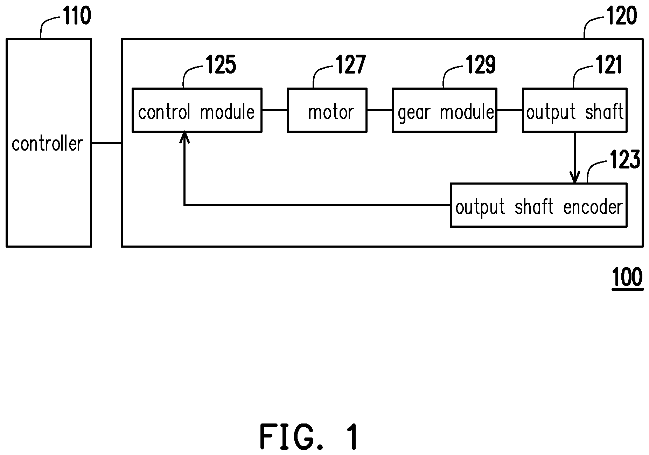

FIG. 1 is a block diagram showing an automatic control apparatus according to an embodiment of the disclosure. With reference to FIG. 1, an automatic control apparatus 100 includes a controller 110 and a motor device 120. The motor device 120 is coupled to the controller 110. The motor device 120 includes an output shaft 121, an output shaft encoder 123, a control module 125, a motor 127 and a gear module 129. In this embodiment, the control module 125 is coupled to the motor 127 to control the motor 127. The motor 127 is assembled to the output shaft 121 and the gear module 129 to drive the output shaft 121 and the gear module 129. The output shaft encoder 123 is coupled to the output shaft 121. In one embodiment, the output shaft encoder 123 includes, for example, a variable resistor having an angular range of 300 degrees. For example, two ends of the variable resistor may be coupled to a voltage of 5 volts, and when the output shaft 121 is rotated, a resistance of the variable resistor varies corresponding to the rotation angle of the output shaft 121. Consequently, the output shaft encoder 123 correspondingly obtains the rotation angle of the output shaft 121 by reading the resistance of the variable resistor.

In this embodiment, the motor device 120 may be, for example, a single-axis smart servo motor, but the disclosure is not limited thereto. In this embodiment, the motor device 120 receives commands of the controller 110 to execute corresponding operations. The commands of the controller 110 include, for example, a fix command, a relax command, a read rotation angle command and a set target angle command. In this embodiment, the fix command means that the output shaft 121 of the motor device 120 is maintained at a target angle. The relax command means that the output shaft 121 of the motor device 120 is freely rotatable. The read rotation angle command means that the controller 110 reads and records the current angle of the output shaft 121. The set target angle command means that the controller 110 drives the output shaft 121 to rotate to the target angle using proportional-integral-derivative (PID) control theory and fixes the output shaft at the target angle.

In this embodiment, the controller 110 is, for example, a central processing unit (CPU), a system-on-chip (SoC) or other programmable microprocessors for general or special use, a digital signal processor (DSP), a programmable controller, an application specific integrated circuit (ASIC), a programmable logic device (PLD), other similar processing devices, or a combination of the foregoing devices.

For example, in this embodiment, the controller 110 is adapted to drive the motor device 120 so that the motor device 120 is operated in a non-fixed mode or a fixed mode. In this embodiment, the motor 127 is controlled by a driving signal provided by the controller 110 to drive the gear module 129, thereby rotating the output shaft 121 by the gear module 129. In other words, when the motor 127 is in operation, the motor 127 drives the gear module 129 and the output shaft 121 to rotate, so that a controlled member connected to the output shaft 121 may move along a specific axis as the output shaft 121 rotates. Besides, in one embodiment, the output shaft encoder 123 is coupled to the output shaft 121. The output shaft encoder 123 is adapted to provide the rotation angle of the output shaft 121 to the controller 110, so that the controller 110 records the current rotation angle of the output shaft 121 or performs certain determination operations according to the current rotation angle. However, internal components of the motor in this embodiment may each be sufficiently understood from the teaching, suggestion and illustration of the common knowledge of this field. Thus, details thereof are not repeated hereinafter.

However, the following should be noted here: in one embodiment, the automatic control apparatus 100 is, for example, a robot having a plurality of rotatable joint mechanisms, and each of the rotatable joint mechanisms is composed of one or more motor devices 120. Consequently, when the automatic control apparatus 100 includes a plurality of motor devices 120, the controller 110 may be coupled to the motor devices 120 by a serial port, and the controller 110 may drive the motor devices 120 sequentially or simultaneously so that each of the motor devices 120 may independently implement (either sequentially or simultaneously) the automatic control method recited in each of the embodiments of the disclosure.

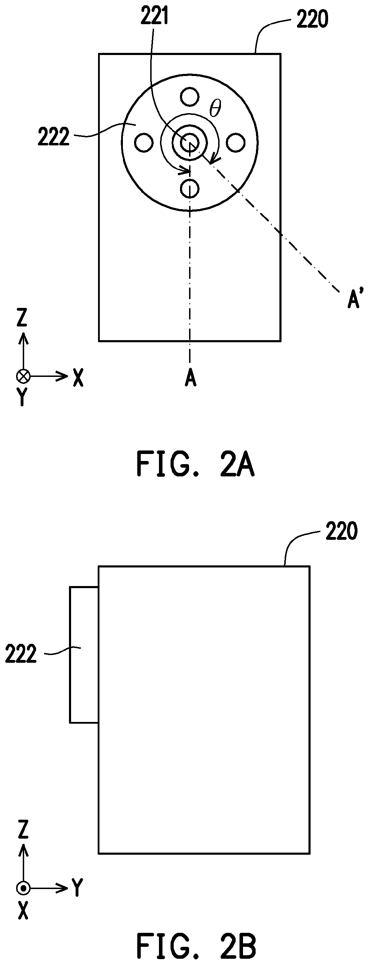

FIG. 2A is a schematic front view of a motor device according to an embodiment of the disclosure. FIG. 2B is a schematic side view of a motor device according to an embodiment of the disclosure. With reference to FIG. 2A and FIG. 2B, a device body of a motor device 220 includes an output shaft 221 and a controlled member 222. In FIG. 2A, the output shaft 221 extends in a direction Y, and the output shaft 221 and the controlled member 222 are rotated in a plane formed by a direction X and a direction Z. In FIG. 2B, the motor device 220 is in a fixed state with respect to the controlled member 222, and the controlled member 222 is in a rotatable state.

In this embodiment, the output shaft 221 is combined with the controlled member 222 so that the controlled member 222 is moved in conjunction with the rotation of the output shaft 221. In this embodiment, a rotation range θ of the output shaft 221 of the motor device 220 is in a range of 0 degrees to 300 degrees, but the disclosure is not limited thereto. In other words, the rotation range θ of the output shaft 221 may be as shown in FIG. 2A. The rotation range θ is a range from a rotation boundary A to a rotation boundary A'. Besides, in this embodiment, the motor device 220 has a resolution of 1024 steps, but the disclosure is not limited thereto. In one embodiment, the rotation range of the output shaft 221 may also be, for example, in a range of 0 degrees to 360 degrees or in other rotation ranges, and the resolution of the motor device 220 may also be, for example, 512, 1024 or 2048 steps and so on.

Besides, in this embodiment, the controlled member 222 may be combined with other mechanical members on the side opposite to the direction Y. In other words, the controlled member 222 is moved in conjunction with the rotation of the output shaft 221, and is combined with other mechanical members to constitute an automatic control apparatus such as a robotic arm or a robot. Besides, in this embodiment, when the motor device 220 is operated in a non-fixed mode, the output shaft 221 is in a freely rotatable state. When the motor device 220 is operated in a fixed mode, the output shaft 221 is in a non-freely rotatable state. It should be noted that the freely rotatable state means that the output shaft 221 may be freely rotated within the rotation range θ as influenced by an external force. The non-freely rotatable state means that whether or not the output shaft 221 is fixed at the after-rotation position may be determined by whether or not the change in the rotation angle caused by a torque applied to the output shaft 221 exceeds a threshold angle.

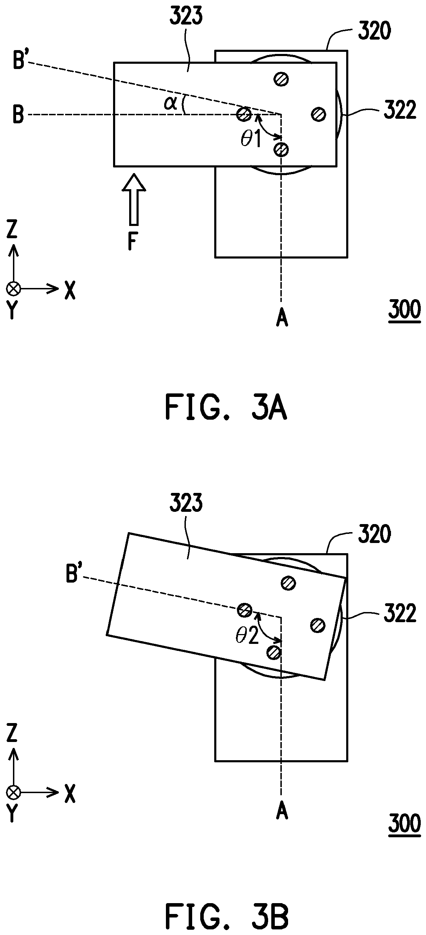

FIG. 3A and FIG. 3B are schematic views showing an automatic control apparatus according to an embodiment of the disclosure. With reference to FIG. 3A and FIG. 3B, an automatic control apparatus 300 includes a motor device 320 and a mechanical member 323. In this embodiment, a device body of the motor device 320 includes an output shaft (not shown) and a controlled member 322, and the motor device 320 may further include a controller 110 and various internal components as described above in the embodiment of FIG. 1. In this embodiment, the mechanical member 323 is combined with the controlled member 322 so that the mechanical member 323 is moved in conjunction with the rotation of the controlled member 322.

However, in one embodiment, the automatic control apparatus 300 may be a robotic arm or a robot, for example, so that the automatic control apparatus 300 may also be constituted by a plurality of motor devices 320 that are each operated independently. And these motor devices 320, which are each operated independently or are integrated by the controller 110 to be operated sequentially, may each implement the automatic control method recited in each of the embodiments of the disclosure.

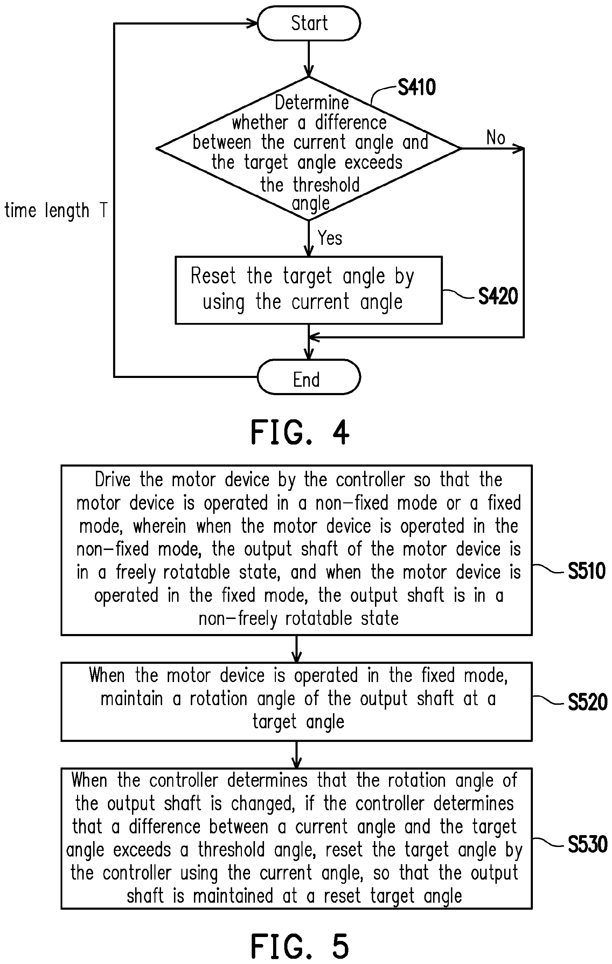

FIG. 4 is a flowchart showing an automatic control method according to an embodiment of the disclosure. With reference to FIG. 3A, FIG. 3B and FIG. 4, in FIG. 3A, if the motor device 320 is operated in a non-fixed mode, the output shaft of the motor device 320 is in a freely rotatable state. In the case where a user does not apply an external force, the mechanical member 323 is maintained at a rotation position B, wherein the rotation angle of the output shaft is a preset target angle θ1 (from the rotation boundary A to the rotation position B). However, when a user applies a force F to the mechanical member 323 in the direction Z, if the change in the rotation angle caused by the force F exceeds a threshold angle, the mechanical member 323 and the output shaft are rotated. In this embodiment, the unit of the force F is, for example, a newton (N). Besides, in this embodiment, the automatic control apparatus 300 implements the automatic control method as shown in FIG. 4, so that the mechanical member 323 may automatically adjust the target angle of the output shaft according to the force applied by the user.

Specifically, in step S410, the automatic control apparatus 300 determines whether a difference between the current angle and the target angle of the output shaft exceeds the threshold angle. If yes, the automatic control apparatus 300 then performs step S420. If no, the automatic control apparatus 300 then terminates the determination. In step S420, the automatic control apparatus 300 resets the target angle by using the current angle. Besides, in the automatic control method of this embodiment, step S410 and step S420 may be performed repeatedly at intervals of a time length T. In one embodiment, the time length T is, for example, 1 second, 500 milliseconds, 1000 milliseconds, etc. The time length T maybe determined according to different equipment requirements or sensitivity design, which is not limited by the disclosure.

In other words, the automatic control apparatus 300 determines whether or not the rotation angle of the output shaft is changed. As shown in FIG. 3B, if the automatic control apparatus 300 determines that the difference between the current angle θ1+α and the target angle θ1 of the output shaft exceeds the threshold angle, the automatic control apparatus 300 then resets the target angle θ1 by using the current angle θ1+α, so that the output shaft, while not being subjected to the force F applied by the user, may be maintained at a reset target angle θ2 (from the rotation boundary A to a rotation position B'). In other words, since the added rotation angle α of the output shaft exceeds the threshold angle, the output shaft is maintained at the reset target angle θ2 (θ2=θ1+α), and the mechanical member 323 is maintained at the rotation position B'. In contrast, in one embodiment, if the automatic control apparatus 300 determines that the difference between the current angle θ1+α and the target angle θ1 of the output shaft does not exceed the threshold angle, the automatic control apparatus 300 then does not reset the target angle θ1. Consequently, when the user stops applying the force F, the mechanical member 323 returns to the target angle θ1 from the current angle θ1+α so that the mechanical member 323 is maintained at the rotation position B.

However, it should be noted here that the size of the above-mentioned threshold angle is designed corresponding to the gravity affecting the mechanical member 323, so that the mechanical member 323, while not being subjected to the force applied by the user, may be maintained at the position of the current target angle θ1. In other words, the rotation angle caused by the gravity affecting the mechanical member 323 does not exceed the above-mentioned threshold angle. Consequently, when the motor device 320 is operated in the fixed mode, even if the user does not apply a force to the mechanical member 323, the mechanical member 323 and the output shaft may be maintained at the position of the preset target angle θ1. Besides, the above-mentioned threshold angle is, for example, an amount of angular change when the output shaft is rotated by 4 steps. In other words, taking a motor device with a resolution of 1024 steps and a rotation range of 300 degrees as an example, the amount of angular change when the output shaft is rotated by 4 steps is approximately equal to 1.17 degrees ((300/1024)×≈1.17), but the disclosure is not limited thereto.

FIG. 5 is a flowchart showing an automatic control method according to another embodiment of the disclosure. With reference to FIG. 3A, FIG. 3B and FIG. 5, the automatic control method as shown in FIG. 5 is adapted for the automatic control apparatus 300 of FIG. 3A and FIG. 3B, for example. In step S510, the automatic control apparatus 300 drives the motor device 320 by a controller so that the motor device 320 is operated in a non-fixed mode or a fixed mode. When the motor device 320 is operated in the non-fixed mode, the output shaft of the motor device 320 is in a freely rotatable state. When the motor device 320 is operated in the fixed mode, the output shaft is in a non-freely rotatable state. In step S520, when the motor device 320 is operated in the fixed mode, the rotation angle of the output shaft is maintained at the target angle θ1. In step S530, when the automatic control apparatus 300 determines by the controller that the rotation angle of the output shaft is changed, if the controller determines that a difference between the current angle θ1+α and the target angle θ1 exceeds the threshold angle, the controller then resets the target angle θ1 by using the current angle θ1+α, so that the output shaft is maintained at the reset target angle θ2 (*θ* 2=θ1+α). Consequently, when the motor device 320 is operated in the fixed mode, the automatic control apparatus 300 of this embodiment may effectively determine whether or not to fix the output shaft at the after-rotation position according to the degree of change in the rotation angle caused by a torque applied to the output shaft of the motor device 320.

Besides, other features and embodiments of the automatic control apparatus and the motor device in this embodiment may be sufficiently understood from the teaching, suggestion, and illustration of the embodiments in FIG. 1 to FIG. 3B. Thus, details thereof are not repeated hereinafter.

In summary, the automatic control apparatus and the automatic control method of the disclosure provide an operation method that may effectively fine-tune the rotation angle of the output shaft of the motor device. When the motor device is operated in the fixed mode, the output shaft of the motor device is maintained at the position of the target angle. In the case where the motor device is operated in the fixed mode, if the user applies a force to the output shaft of the motor device, the output shaft of the motor device is then rotated by the external force applied by the user, and when the rotation angle exceeds the preset threshold angle, the output shaft of the motor device in this disclosure may be maintained at the position of the adjusted rotation angle. Accordingly, the automatic control apparatus of the disclosure may provide a convenient posture adjustment function.

## Claims

1. An automatic control apparatus (100, 300), comprising:
a motor device (120, 220, 320) comprising an output shaft (121, 221); and
a controller (110) coupled to the motor device (120, 220, 320) to drive the motor device (120, 220, 320) so that the motor device (120, 220, 320) is operated in a non-fixed mode or a fixed mode, wherein when the motor device (120, 220, 320) is operated in the non-fixed mode, the output shaft (121, 221) is in a freely rotatable state, and when the motor device (120, 220, 320) is operated in the fixed mode, the output shaft (121, 221) is in a non-freely rotatable state,
wherein when the motor device (120, 220, 320) is operated in the fixed mode, a rotation angle of the output shaft (121, 221) is maintained at a target angle,
wherein when the controller (110) determines that the rotation angle of the output shaft (121, 221) is changed, if the controller (110) determines that a difference between a current angle and the target angle exceeds a threshold angle, the controller (110) resets the target angle by the current angle, so that the output shaft (121, 221) is maintained at a reset target angle.

2. The automatic control apparatus (100, 300) as recited in claim 1, wherein if the controller (110) determines that the difference between the current angle and the target angle does not exceed the threshold angle, the controller (110) drives the output shaft (121, 221) to return to the target angle.

3. The automatic control apparatus (100, 300) as recited in claim 1 or 2, wherein a rotation range (θ) of the output shaft (121, 221) of the motor device (120, 220, 320) is in a range of 0 degrees to 300 degrees.

4. The automatic control apparatus (100, 300) as recited in any one of claims 1 to 3, wherein the motor device (120, 220, 320) has 1024 steps, and the threshold angle is an amount of angular change when the output shaft (121, 221) is rotated by 4 steps.

5. The automatic control apparatus (100, 300) as recited in any one of claims 1 to 4, wherein when the motor device (120, 220, 320) is operated in the fixed mode, the controller (110) redetermines whether the rotation angle of the output shaft (121, 221) is changed at intervals of a time length.

6. The automatic control apparatus (100, 300) as recited in any one of claims 1 to 5, wherein the motor device (120, 220, 320) is a single-axis smart servo motor.

7. The automatic control apparatus (100, 300) as recited in any one of claims 1 to 6, further comprising:
a mechanical member (323) combined with the output shaft (121, 221) of the motor device (120, 220, 320) and moved in conjunction with the output shaft (121, 221) so as to generate a torque on the output shaft (121, 221) when the mechanical member (323) is subjected to an external force.

8. The automatic control apparatus (100, 300) as recited in any one of claims 1 to 7, wherein the motor device (120, 220, 320) further comprises:
an output shaft (121, 221) encoder coupled to the output shaft (121, 221) for obtaining the rotation angle of the output shaft (121, 221);
a control module 125 coupled to the output shaft (121, 221) encoder;
a motor (127) coupled to the control module 125, wherein the control module 125 is adapted to drive the motor (127); and
a gear module (129) coupled to the motor (127) and to the output shaft (121, 221), wherein the gear module (129) and the output shaft (121, 221) are moved in conjunction with each other.

9. The automatic control apparatus (100, 300) as recited in any one of claims 1 to 8, further comprising:
a plurality of motor devices (120, 220, 320) coupled to the controller (110) by a serial port, wherein the controller (110) drives the plurality of motor devices (120, 220, 320) sequentially or simultaneously.

10. An automatic control method adapted for an automatic control apparatus (100, 300), wherein the automatic control apparatus (100, 300) comprises a controller (110) and a motor device (120, 220, 320) and the motor device (120, 220, 320) comprises an output shaft (121, 221), the automatic control method comprising:
driving the motor device (120, 220, 320) by the controller (110) so that the motor device (120, 220, 320) is operated in a non-fixed mode or a fixed mode, wherein when the motor device (120, 220, 320) is operated in the non-fixed mode, the output shaft (121, 221) of the motor device (120, 220, 320) is in a freely rotatable state, and when the motor device (120, 220, 320) is operated in the fixed mode, the output shaft (121, 221) is in a non-freely rotatable state;
when the motor device (120, 220, 320) is operated in the fixed mode, maintaining a rotation angle of the output shaft (121, 221) at a target angle; and
when the controller (110) determines that the rotation angle of the output shaft (121, 221) is changed, if the controller (110) determines that a difference between a current angle and the target angle exceeds a threshold angle, resetting the target angle by the controller (110) using the current angle, so that the output shaft (121, 221) is maintained at a reset target angle.

11. The automatic control method as recited in claim 10, further comprising:
if the controller (110) determines that the difference between the current angle and the target angle does not exceed the threshold angle, driving the output shaft (121, 221) to return to the target angle by the controller (110).

12. The automatic control method as recited in claim 10 or 11, wherein a rotation range (θ) of the output shaft (121, 221) of the motor device (120, 220, 320) is in a range of 0 degrees to 300 degrees.

13. The automatic control method as recited in any one of claims 10 to 12, wherein the motor device (120, 220, 320) has 1024 steps, and the threshold angle is an amount of angular change when the output shaft (121, 221) is rotated by 4 steps.

14. The automatic control method as recited in any one of claims 10 to 13, wherein when the motor device (120, 220, 320) is operated in the fixed mode, the controller (110) redetermines whether the rotation angle of the output shaft (121, 221) is changed at intervals of a time length.

15. The automatic control method as recited in any one of claims 10 to 14, wherein the automatic control apparatus (100, 300) further comprises a plurality of motor devices (120, 220, 320), and the plurality of motor devices (120, 220, 320) are coupled to the controller (110) by a serial port, so that the controller (110) drives the plurality of motor devices (120, 220, 320) sequentially or simultaneously.
